# EUROPEAN PATENT APPLICATION

(11) **EP 1 847 435 A1**
(43) Date of publication of application: **24.10.2007**
(21) Application number: 05710013.3
(22) Date of filing: 09.02.2005
(51) Int. Cl.: B61L 27/00

(54) **TRAIN OPERATION MANAGEMENT SYSTEM**

(71) Applicant: MITSUBISHI DENKI KABUSHIKI KAISHA, Chiyoda-ku, Tokyo 100-8310 (JP)
(72) Inventor: FUKAWA, Tatsuya, c/o Mitsubishi Denki K.K., Chiyoda-ku, Tokyo 100-8310 (JP)
(74) Representative: Sajda, Wolf E.
(86) International application number: PCT/JP2005/001961
(87) International publication number: WO 2006/085371

(57) **Abstract**

A train service managing system of the invention predicts irregularity of a schedule and creates a predicted schedule on the basis of an on-rail state data and a schedule of the day, detects operation irregularity occurring in a route in which a crew member serves from crew operation information and the predicted schedule and outputs warning information concerning the operation irregularity, proposes recovery information for recovery from the operation irregularity of the crew member on the basis of the warning information, and rewrites, when the recovery information proposed is approved by a service commander, the crew operation information to content proposed in the recovery information.

## Description

### Technical Field

The present invention relates to a train service managing system for restoring a train service having irregularity to a schedule of the day, and, more particularly to a train service managing system for performing efficient operation for a motorman and a conductor who serve on a train.

### Background Art

Since railroads serving the environs of large cities play an important role as means for commutation, irregularity of train services significantly affects people. Thus, it is demanded, when irregularity of a train service occurs, the train service having the irregularity is restored to a schedule of the day as soon as possible. To meet such a demand, for example, a train service managing system described in JP-A-7-132 833 has already been proposed. This conventional train service managing system has been proposed by the same applicant as this application and includes a constitution described below.

An interlocking apparatus is operated by a lever board set at each station to control a signal and a point. Latest on-rail state data is transmitted from a station control apparatus connected to the interlocking apparatus to a central processing unit via a local area network. A restored schedule creating apparatus performs a simulation for each train on the basis of the latest on-rail state data transmitted to the central processing unit and a schedule of the day. The restored schedule creating apparatus determines train operation on the basis of a result of this simulation and schedule creation decision rules input in advance and repeatedly executes the simulation until all registered trains reach terminal stations to create a restored schedule.

Restoration of a schedule is performed according to the restored schedule created. In order to offer services complying with the restored schedule, a service commander instructs a service section office to change operation of routes for service sections, time, and the like of rèspective crew members through a telephone, a facsimile, or the like in accordance with content of the change of the schedule.
A person in charge at the service section office examines the operation change of routes of the crew members on the basis of the restored schedule indicated and instructs the respective crew members about the operation change through a telephone, a facsimile, or the like.

Patent Document 1: JP-A-7-132 833

### Disclosure of the Invention

### Problems that the Invention is to solve

However, in the conventional train service managing system described above, when a train service cannot be offered following a schedule, irregularity of crew operation occurs. For example, a crew member is late for a train on which the crew member servers next because of a delay, suspension, or the like of the train, cannot go to a station where the screw member gets on a train, or gets on a wrong train.
In such a case, a change of operation is performed for recovery from the irregularity of the crew operation according to judgment of a service commander who manages services of trains. However, when a schedule of the day is dense, there is a problem in that it is hard for the service commander to make judgment. The invention has been devised to solve the problem and allows the service commander who manages services of trains to easily perform a change of operation for recovery from irregularity of crew operation.

### Means for solving the Problems

A train service managing system according to the invention is a train service managing system that restores, when a train service following a set schedule of the day becomes impossible, the train service to the schedule of the day. The train service managing system includes: schedule irregularity predicting means that predicts irregularity of a schedule and creates a predicted schedule on the basis of an on-rail state data and the schedule of the day; crew operation information registering means in which crew operation information of a crew member serving on a train for operating the schedule of the day is recorded; crew operation irregularity predicting means that detects operation irregularity occurring in a route in which the crew member serves from the crew operation information and the predicted schedule and outputs warning information concerning the operation irregularity; crew operation recovery proposing means that proposes recovery information for recovery from the operation irregularity of the crew member on the basis of the warning information; and approving means that rewrites, when the recovery information proposed is approved by a service commander, the crew operation information recorded in the crew operation information registering means to content proposed in the recovery information.

The train service managing system also includes: a wide area network set among plural service section offices where crew members serving on trains of a schedule of the day are on standby; message communicating means that outputs message information from the service commander to the service section offices; information inspecting means that makes it possible to inspect the message information and rewritten latest crew operation information in the service section offices and outputs the message information and the latest crew operation information; and terminals for service section offices set in the service section offices, with which it is possible to inspect the latest crew operation information output from the information inspecting means.

The train service managing system also includes: ground access points to which the message information and the latest crew operation information are transmitted through the wide area network; ground radio apparatuses that transmit the message information and the latest crew operation information to the train; an onboard radio apparatus arranged in the train, to which the message information and the latest crew operation information are transmitted from the ground radio apparatuses; an onboard access point arranged in the train to which the message information and the latest crew operation information are transmitted from the onboard radio apparatus; and information acquiring means with which it is possible to inspect the message information and the latest crew operation information from the respective access points.
Moreover, the train service managing system includes crew operation information managing apparatus that detects, when the crew member accesses the respective access points with the information acquiring means, a position where the crew member is present.

### Effects of the Invention

The train service managing system of the invention predicts irregularity of a schedule and creates a predicted schedule on the basis of on-rail state data and a schedule of the day, detects operation irregularity occurring in a route in which a crew member serves from crew operation information and the predicted schedule and outputs warning information concerning the operation irregularity, proposes recovery information for recovery from the operation irregularity of the crew member on the basis of the warning information, and, when the recovery information proposed is approved by a service commander, causes the service commander to rewrite the crew operation information to content proposed in the recovery information. Consequently, the service commander who manages services of trains can easily change operation for recovery from irregularity of crew operation.

The terminals for service section offices, with which it is possible to inspect message information and latest crew operation information output from the information inspecting means, are set in service section offices. Consequently, it is possible to acquire the latest crew operation information at the service section offices that manage crew members.
The crew member is capable of inspecting message information and latest crew operation information with the information acquiring means from the ground access points to which the message information and the latest crew operation information are transmitted through the wide area network and the onboard access point arranged in the train to which the message information and the latest crew operation information are transmitted from the radio apparatuses. Consequently, the-crew member can easily learn the crew operation information.

A position where the crew member is present is detected when the crew member accesses the ground and onboard access points with the information acquiring means. Consequently, it is possible to monitor, on the ground, the position where the crew member is present and grasp, for example, whether the crew member serving on the train is on a correct train and where unoccupied crew members are present.

### Best Mode for carrying out the Invention

### First Embodiment

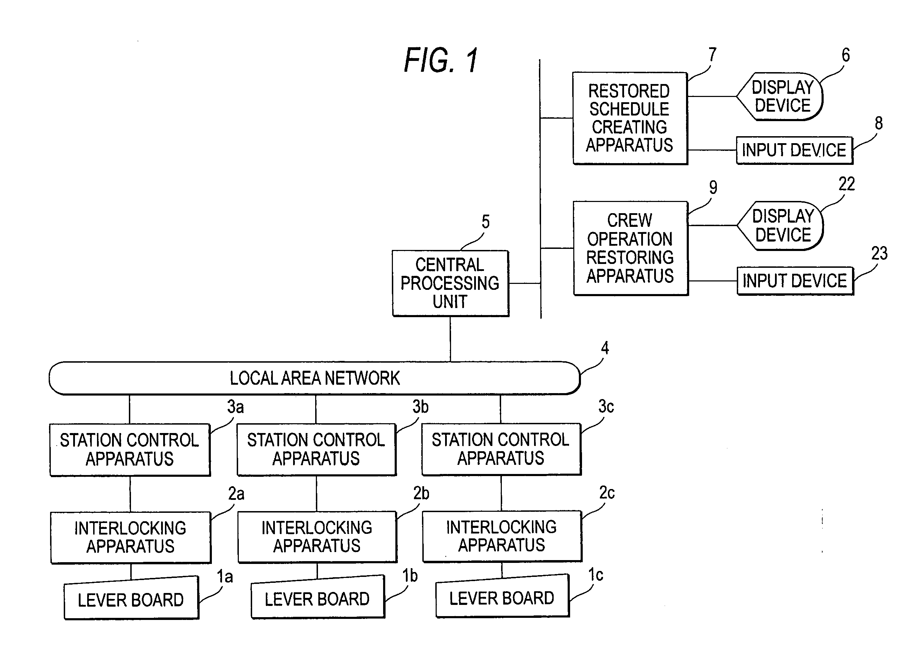

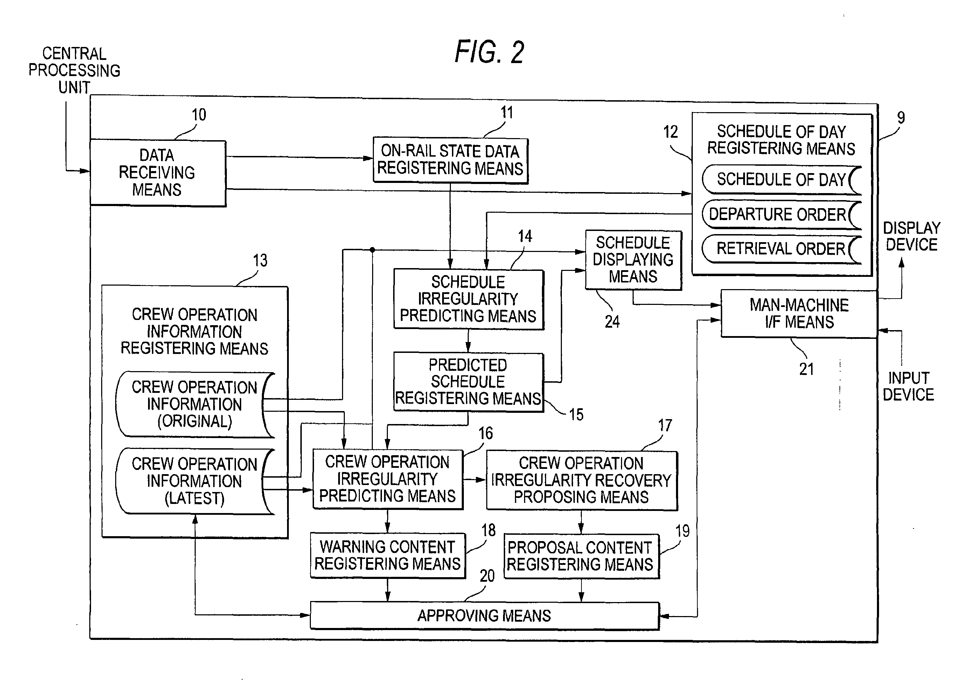

Fig. 1 is an overall diagram of a train service managing system according to a first embodiment of the invention. Fig. 2 is a block diagram showing details of a crew operation restoring apparatus in Fig. 1. In Figs. 1 and 2, lever boards 1a to 1c set in respective stations are manually operated to control signals (not shown) and points (not shown) via interlocking apparatuses 2a to 2c.
As a result of the control, latest on-rail state data of a train is transmitted from station control apparatuses 3a to 3c connected to the interlocking apparatuses 2a to 2c to a central processing unit 5 via a local area network 4. A display device 6 connected to the central processing unit 5 displays a train diagram with a distance set on an ordinate and time set on an abscissa.

A restored schedule creating apparatus 7 performs a simulation for a route of each train on the basis of data such as information on a change of a schedule of the day input from an input device 8 by a service commander, latest on-rain state data transmitted from the respective station control apparatuses 3a to 3c to the central processing unit 5, and a schedule of the day registered in the central processing unit 5.
The restored data creating apparatus 7 determines train operation on the basis of a result of the simulation and schedule creation decision rules input in advance and repeatedly executes the simulation until all registered trains reaches terminal stations to create a restored schedule. This restored schedule is connected to the schedule of the day by the central processing unit 5.

A crew operation restoring apparatus 9 is a characteristic part of this embodiment. As shown in detail in Fig. 2, latest on-rain state data and a schedule of the day input via data receiving means 10 connected to the central processing unit 5 are registered in on-rail state data registering means 11 and schedule of the day registering means 12, respectively. Crew operation information (original) designating routes such as service sections and time of crew members is recorded in crew operation information registering means 13.
Schedule irregularity predicting means 14 creates a predicted schedule, in which schedule irregularity is predicted, with a method same as the simulation for creating the restored schedule on the basis of traveling times and running intervals according to the latest on-rail state data and the schedule of the day. The predicted schedule created is registered in predicted schedule registering means 15 for each train number. In general, the predicted schedule is created up to several hours ahead.

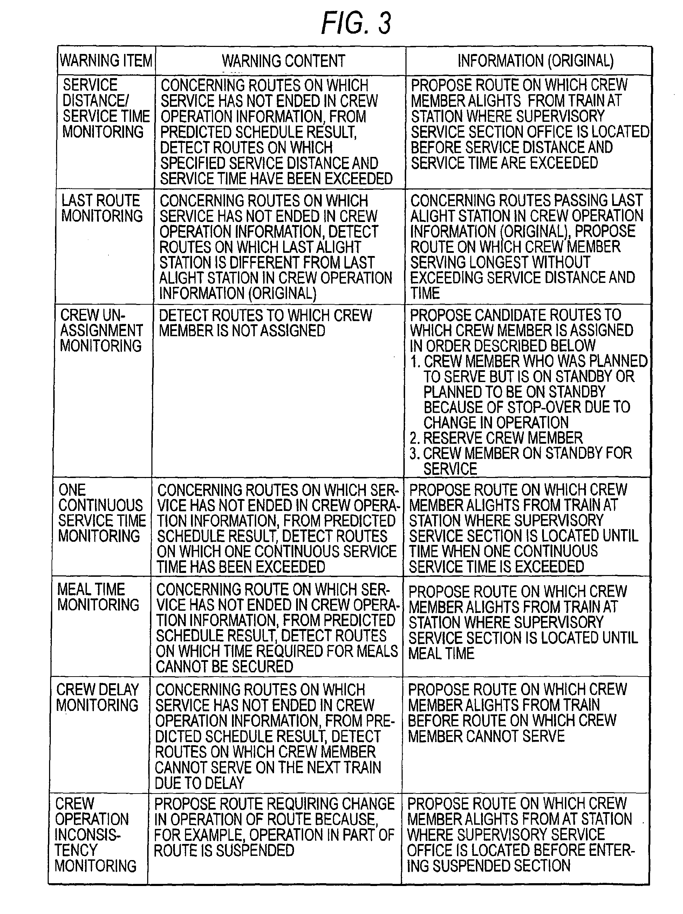

Crew operation irregularity predicting means 16 outputs warning content for each warning item as shown in Fig. 3 for each route of the crew members on the basis of the predicted schedule and the crew operation information (original). Subsequently, crew operation irregularity recovery proposing means 17 outputs proposal content for solving the problem as shown in Fig. 3 according to the warning content.
The warning content output from the crew operation irregularity predicting means 16 is registered in warning content registering means 18. The proposal content output from the crew operation irregularity recovery proposing means 17 is recorded in proposal content registering means 19.

Fig. 3 is a diagram for explaining an example of warning content and proposal content for each warning item. For example, in service distance/service time monitoring, concerning routes on which service has not ended in the crew operation information, from a predicted schedule result, routes on which specified service distance and service time have been exceeded are detected as the warning content to give a warning.
In response to this warning, for example, a route on which a crew member alights from a train at a station where a supervisory service section office is located before the service distance and the service time are exceeded is proposed. In the next last route monitoring, concerning the routes on which service has not ended in the crew operation information, routes on which a last alight station is different from a last alight station in the crew operation information (original) are detected.
In response to this detection, among routes passing the last alight station in the crew operation information (original), a route on which a crew member serves longest without exceeding the service distance and time is proposed. Although detailed explanations are omitted, concerning warning items such as crew un-assignment monitoring, one continuous service time monitoring, meal time monitoring, crew delay monitoring, and crew operation inconsistency monitoring, warning content and proposal content corresponding to the respective warning items are conceivable.

The warning content and the proposal content are displayed on a display device 22 via approving means 20 and man-machine I/F means 21. The service commander inputs an approval to the approving means 20 from an input device 23 concerning the warning content and the_proposal content displayed on the display device 22 to thereby copy the crew operation information (original), create crew operation information (latest) on the basis of the proposal content, and register the crew operation information (latest) in the crew operation information registering means 13. The crew operation information (original) (latest) and the predicted schedule are displayed on the display device 22 via the schedule display means 24 and the man-machine I/F means 21 according to a command of the service commander input from the input device 23.

As described above, the crew operation irregularity predicting means 16 detects operation irregularity occurring in a route of a crew member and outputs warning information concerning the operation irregularity. The crew operation recovery proposing means 17 proposes recovery information for recovery from the operation irregularity of the crew member on the basis of the warning information. Consequently, it is possible to easily change operation for recovery from irregularity of crew operation according to judgment of the service commander who manages service of the trains.

### Second Embodiment

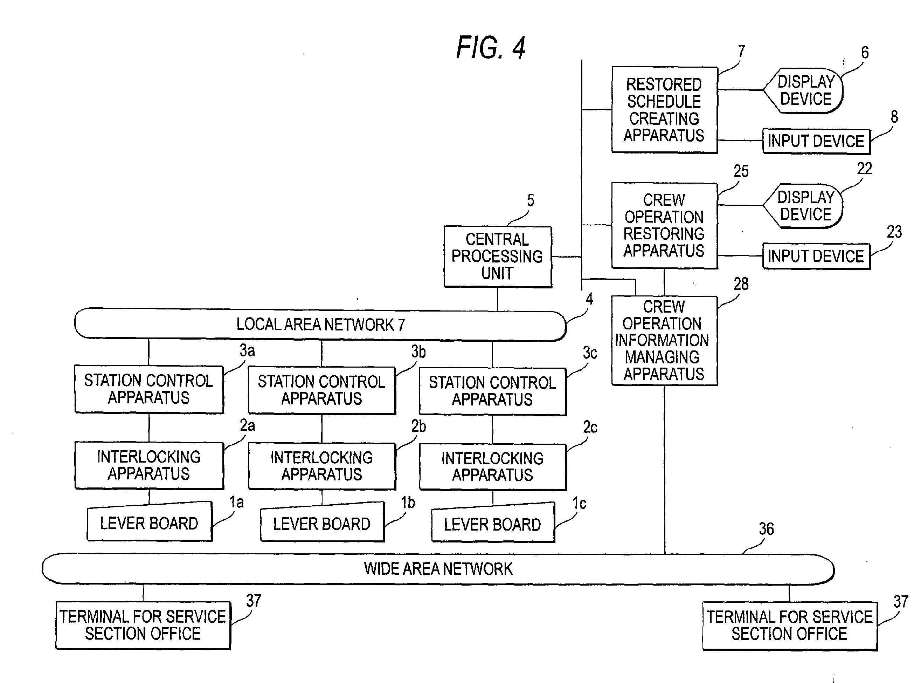

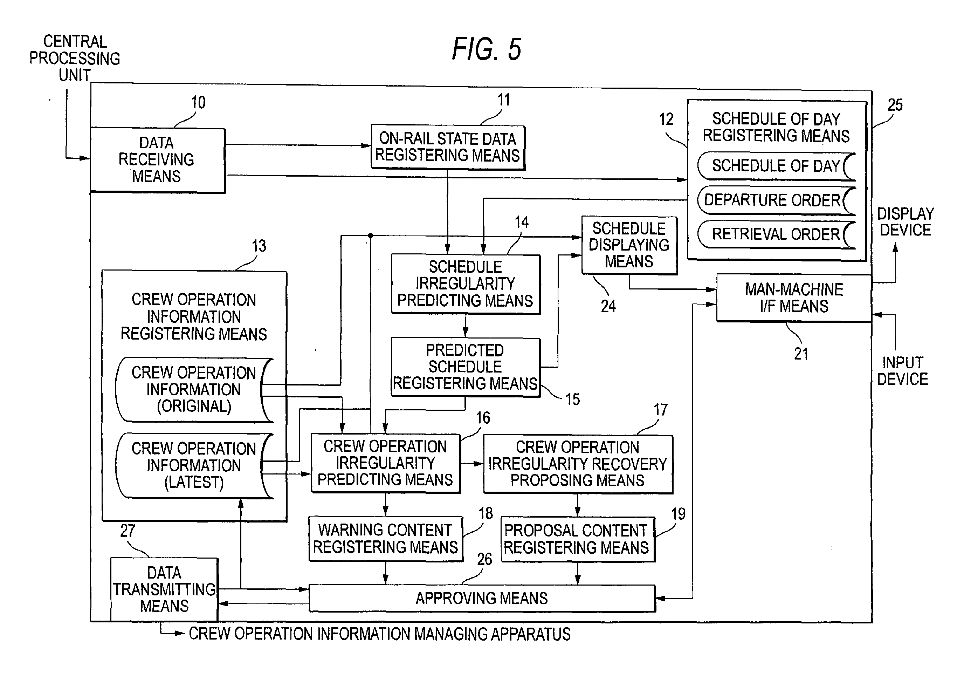

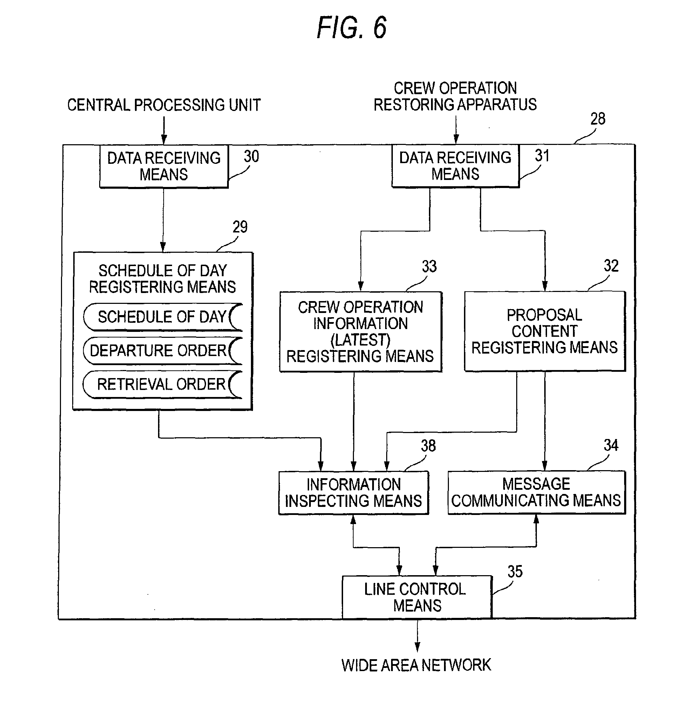

Fig. 4 is an overall diagram of a train service managing system according to a second embodiment. Fig. 5 is a block diagram showing details of a crew operation restoring apparatus 25 in Fig. 4. Fig. 6 is a block diagram showing details of a crew operation information managing apparatus 28 in Fig. 4. In Figs. 4 to 6, reference signs and numerals 1a to 1c, 2a to 2c, 3a to 3c, 4 to 8, 10 to 19, and 21 to 24 denote the same components as those in the first embodiment.
The crew operation restoring apparatus 25 includes the components denoted by reference numerals 10 to 19, 21, and 24 and approving means 26 and data transmitting means 27 described later.

The warning content and the proposal content are displayed on the display device 22 via the approving means 26 and the man-machine I/F means 21. Concerning the warning content and the proposal content displayed on the display device 22, a service commander inputs an approval to the approving means 26 from the input device 23 to thereby copy the crew operation information (original), create crew operation information (latest) on the basis of the proposal content, and register the crew operation information (latest) in the crew operation information registering means 13.
The crew operation information (original) (latest) and a predicted schedule are displayed on the display device 22 via the schedule display means 24 and the man-machine I/F means 21 according to a command of the service commander input from the input device 23. The crew operation information, the warning content, and the proposal content approved in the approving means 26 are changed to transmission data and transmitted to the crew operation information managing apparatus 28 described later by the data transmitting means 27.

The crew operation information managing apparatus 28 includes schedule of the day registering means 29, data receiving means 30 and 31, proposal content registering means 32, crew operation information (latest) registering means 33, message communicating means 34, line control means 35, and information inspecting means 38.
A schedule of the day received from the central processing unit 5 via the data receiving means 30 is registered in the schedule of the day registering means 29. Proposal content received from the crew operation restoring apparatus 25 via the data receiving means 31 is registered in the proposal content registering means 32. Crew operation information (latest) received from the crew operation restoring apparatus 25 via the data receiving means 31 is registered in the crew operation information (latest) registering means 33.

The message communicating means 34 transmits a message, which is received from the service commander, from the line control means 35 to terminals for service section offices 37 described later via a wide area network 36 using an E-mail or the like that is application software for the Internet. A URL address decodable by browser software, which is application software for the Internet, is added to the message of the E-mail transmitted from the message communicating means 34.
By selecting this address, it is possible to inspect the proposal content registered in the proposal content registering means 32 and the crew operation information (latest) output from the information inspecting means 38 in the terminals for service section offices 37 set in respective service section offices.

The line control means 35 of the crew operation information managing device 28 is connected to the wide area network 36. The wide area network 36 is set among plural service section offices where crew members serving on the trains are on standby. The terminals for service section offices 37, with which it is possible to inspect the latest crew operation information output from the information inspecting means 38, are set in the respective service section offices.
As described above, it is possible to inspect the latest crew operation information transmitted via the wide area network 36 in the terminals for service section offices 37.

### Third Embodiment

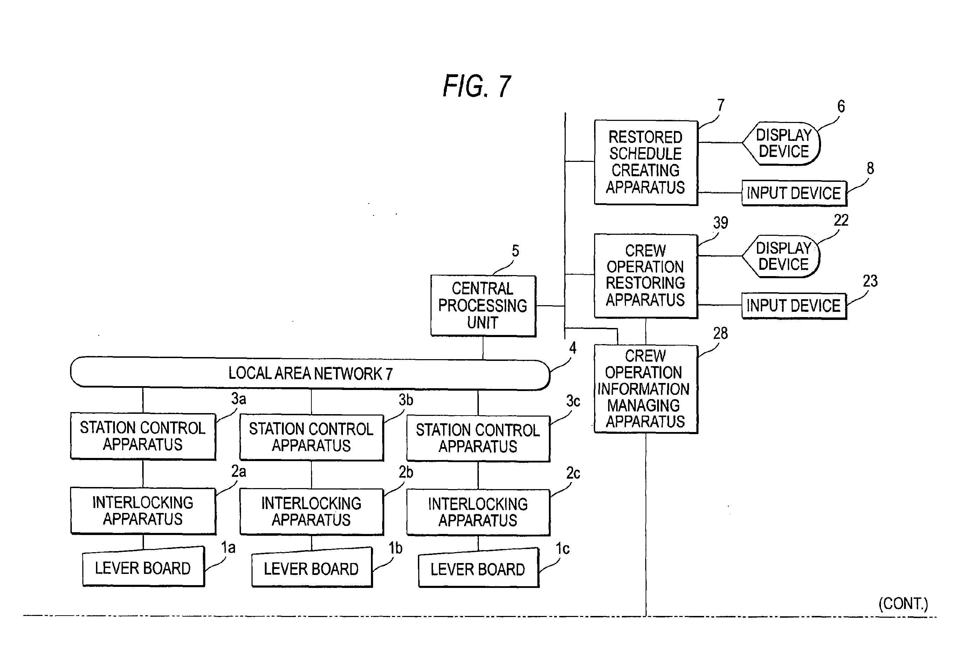

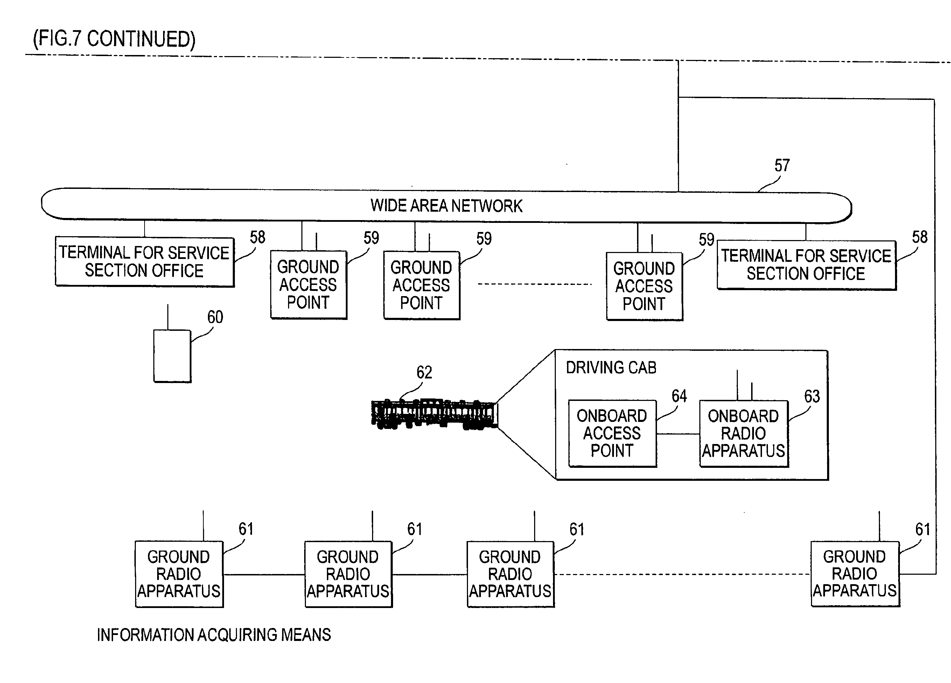

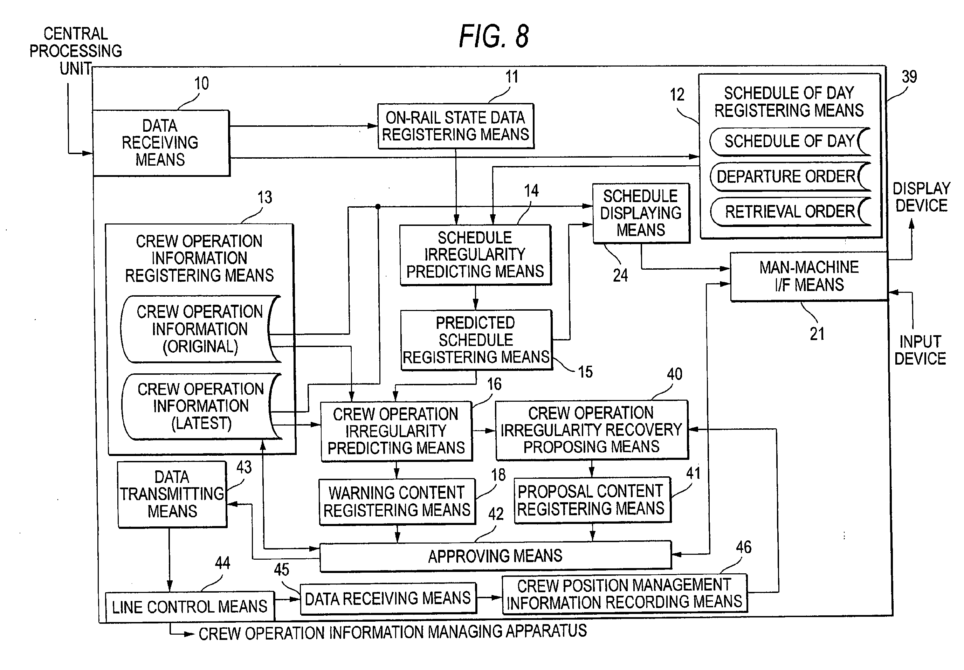

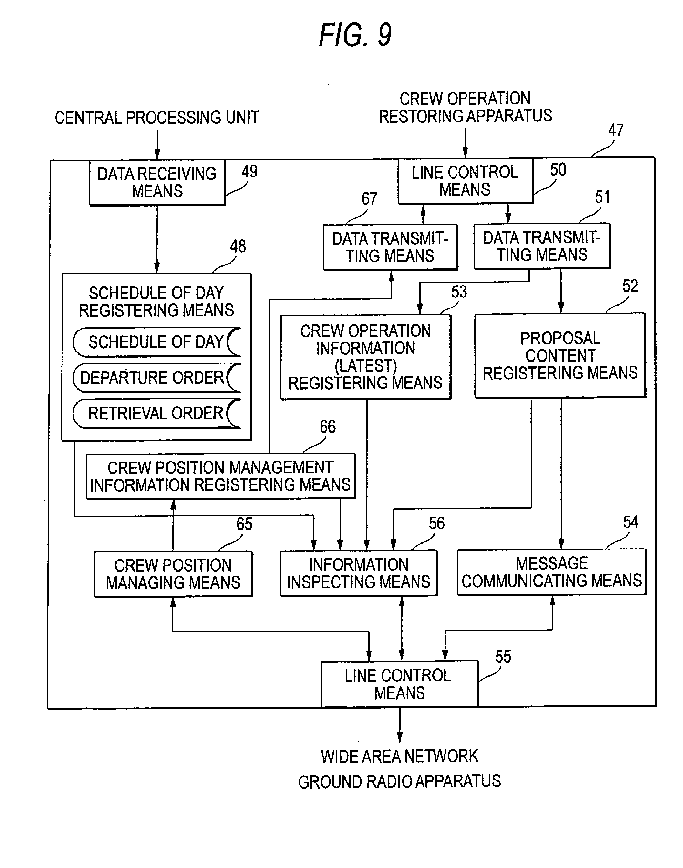

Fig. 7 is an overall diagram of a train service managing system according to a third embodiment. Fig. 8 is a block diagram showing details of a crew operation restoring apparatus 39 in Fig. 7. Fig. 9 is a block diagram showing details of a crew operation information managing apparatus 47 in Fig. 7. In Figs. 7 to 9, reference signs and numerals 1a to 1c, 2a to 2c, 3a to 3c, 4 to 8, 10 to 16, 18, and 21 to 24 denote the same components as those in the first embodiment.

The crew operation restoring apparatus 39 shown in Fig. 8 includes the components denoted by reference numerals 10 to 16, 18, 21, and 24 and components denoted by reference numerals 40 to 46 described later. Crew operation irregularity recovery proposing means 40 outputs proposal content for solving a problem as shown in Fig. 3 according to warning content output from the crew operation irregularity predicting means 16 and crew position management information of crew management information recording means 46 described later.
The proposal content output from the crew operation irregularity recovery proposing means 40 is registered in proposal content registering means 41. The warning content and the proposal content are displayed on the display device 22 via approving means 42 and the man-machine I/F means 21.

Concerning the warning content and the proposal content displayed on the display device 22, a service commander inputs an approval to the approving means 42 from the input device 23 to thereby copy the crew operation information (original), create crew operation information (latest) on the basis of the proposal content, and register the crew operation information (latest) in the crew operation information registering means 13.
The crew operation information (original) (latest) and a predicted schedule are displayed on the display device 22 via the schedule display means 24 and the man-machine I/F means 21 according to a command of the service commander input from the input device 23.

On the other hand, the crew operation information, the warning content, and the proposal content approved in the approving means 42 are changed to transmission data and transmitted to a crew operation information managing apparatus 47 described later by data transmitting means 43 via line control means 44. Conversely, crew position management information received from the crew operation information managing apparatus 47 via the line control means 44 is recorded in the crew position management information recording means 46 via data receiving means 45.

The crew operation information managing apparatus 47 shown in Fig. 9 includes schedule of the day registering means 48, data receiving means 49, line control means 50, data receiving means 51, proposal content registering means 52, crew operation information (latest) registering means 53, message communicating means 54, line control means 55, information inspecting means 56, crew position managing means 65, crew position managing information registering means 66, and data transmitting means 67.
A schedule of the day received from the central processing unit 5 via the data receiving means 49 is registered in the schedule of the day registering means 48. Proposal content received from the crew operation restoring apparatus 39 via the line control means 50 and the data receiving means 51 is registered in the proposal content registering means 52. Crew operation information (latest) received from the crew operation restoring apparatus 39 via the line control means 50 and the data receiving means 51 is registered in the crew operation information (latest) registering means 53.

The message communicating means 54 transmits a message from the service commander to terminals for service section offices 58 describe later via the line control means 55 and a wide area network 57 described later using an E-mail or the like that is an application software for the Internet.
A URL address decodable by browser software, which is application software for the Internet, is added to the message of the E-mail transmitted from the message communicating means 54. By selecting this address, it is possible to inspect, in the terminals for service section offices 58 set in respective service section offices, the schedule of the day registered in the schedule of the day registering means 48, crew position management information registered in the crew position management information registering means 66 described later, and proposal content and crew operation information (latest) output from the information inspecting means 56.
A crew member can inspect the crew operation information (latest) output from the information inspecting means 56 using information acquiring means 60 (see Fig. 7) such as a portable terminal via ground access points 59.

The line control means 55 of the crew operation information managing apparatus 47 is connected to the wide area network 57. The wide area network 57 is set among plural service section offices where crew members serving on trains are on standby. The terminals for service section offices 58, with which it is possible to inspect the latest crew operation information output from the information inspecting means 56, are set in the respective service section offices. The plural ground access points 59, at which it is possible to inspect message information and the latest crew operation information transmitted via the wide area network 57, are set in places where the crew members stop by on the ground such as staff rooms at stations or the like.

The line control means 55 of the crew operation information managing apparatus 47 is also connected to ground radio apparatuses 61. The ground radio -apparatuses 61 are arranged such that a running train 62 can receive signals from the ground ratio apparatuses 61. An onboard radio apparatus 63 capable of communicating with the ground radio apparatuses 61 and an onboard access point 64 connected to the onboard radio apparatus 63 are set in a driving cab of the train 62.
Therefore, on the ground, the crew member can inspect the latest crew operation information by performing communication through the ground access points 59 using the information acquiring means 60. A crew member serving on the train 62 can inspect the latest crew operation information and the like by performing communication through the onboard access point 64 using the information acquiring means 60.

When the crew member on the ground performs communication from the ground access points 59 using the information acquiring means 60, the crew position managing means 65 registers crew position management information corresponding to positions of the ground access points 59 in the crew position management information registering means 66. The crew position management information registered in the crew position management information registering means 66 is transmitted from the data transmitting means 67 to the crew operation restoring apparatus 39 via the line control means 50.
The crew position management information registered in the crew position management information registering means 66 is also transmitted from the information inspecting means 56 to the terminals for service section offices 58 via the wide area network 57. Consequently, it is possible to monitor a place where the crew member is present.
When the crew member serving on the train performs communication from the onboard access point 64 using the information acquiring means 60, the crew position managing means 65 deduces a car number of the train corresponding to a position of the onboard access point 64 and registers the train number in the crew position management information registering means 66. Consequently, it is possible to grasp, for example, whether the crew member is on a correct train and where unoccupied crew members are present.

As described above, according to the third embodiment of the invention, the crew member is capable of inspecting message information and latest crew operation information using the information acquiring means from the ground access points to which the message information and the latest crew operation information are transmitted via the wide area network and the onboard access point arranged in the train to which the message information and the latest crew operation information are transmitted from the radio apparatuses. Consequently, the crew member can easily learn crew operation information.
Moreover, a position where the crew member is present is detected when the crew member accesses the ground and onboard access points using the information acquiring means. Consequently, it is possible to monitor, on the ground, the position where the crew member is present and grasp, for example, whether the crew member serving on the train is on a correct train and where unoccupied crew members are present.

### Brief Description of the Drawings

- Fig. 1: is an overall diagram of a train service managing system according to a first embodiment of the invention.
- Fig. 2: is a block diagram showing details of a crew operation restoring apparatus in Fig. 1.
- Fig. 3: is a diagram for explaining warning content and proposal content.
- Fig. 4: is an overall diagram of a train service managing system according to a second embodiment of the invention.
- Fig. 5: is a block diagram showing details of a crew operation restoring apparatus in Fig. 4.
- Fig. 6: is a block diagram showing details of a crew operation information managing apparatus in Fig. 4.
- Fig. 7: is an overall diagram of a train service managing system according to a third embodiment of the invention.
- Fig. 8: is a block diagram showing details of a crew operation restoring apparatus in Fig. 7.
- Fig. 9: is a block diagram showing details of a crew operation information managing apparatus in Fig. 7.

### Description of Reference Numerals and Signs

- 13: Crew operation information registering means
- 14: Schedule irregularity predicting means
- 16: Crew operation irregularity predicting means
- 17: Crew operation irregularity recovery proposing means
- 20, 26, 42: Approving means
- 36, 57: Wide area networks
- 37, 58: Terminals for service section offices
- 34: Message communicating means
- 38: Information inspecting means
- 59: Ground access points
- 60: Information acquiring means
- 61: Ground radio apparatuses
- 63: Onboard radio apparatus
- 64: Onboard access point
- 65: Crew position managing means

## Claims

1. A train service managing system that restores, when a train service following a set schedule of a day becomes impossible, the train service to the schedule of the day, the train service managing system comprising: schedule irregularity predicting means that predicts irregularity of a schedule and creates a predicted schedule on the basis of an on-rail state data and the schedule of the day; crew operation information registering means in which crew operation information of a crew member serving on a train for operating the schedule of the day is recorded; crew operation irregularity predicting means that detects operation irregularity occurring in a route in which the crew member serves from the crew operation information and the predicted schedule and outputs warning information concerning the operation irregularity; crew operation irregularity recovery proposing means that proposes recovery information for recovery from the operation irregularity of the crew member on the basis of the warning information; and approving means that rewrites, when the recovery information proposed is approved by a service commander, the crew operation information recorded in the crew operation information registering means to content proposed in the recovery information.

2. A train service managing system according to claim 1, comprising: a wide area network set among plural service section offices where crew members serving on trains of a schedule of the day are on standby; message communicating means that outputs message information from the service commander to the service section offices; information inspecting means that makes it possible to inspect the message information and rewritten latest crew operation information in the service section offices and outputs the message information and the latest crew operation information; and terminals for service section offices set in the service section offices, with which it is possible to inspect the latest crew operation information output from the information inspecting means.

3. A train service managing system according to claim 2, comprising: ground access points to which the message information and the latest crew operation information are transmitted through the wide area network; ground radio apparatuses that transmit the message information and the latest crew operation information to the train; an onboard radio apparatus arranged in the train, to which the message information and the latest crew operation information are transmitted from the ground radio apparatuses; and an onboard access point arranged in the train to which the message information and the latest crew operation information are transmitted from the onboard radio apparatus, wherein it is possible to inspect the message information and the latest crew operation information from the respective access points using information acquiring means.

4. A train service managing system according to claim 3, comprising crew operation information managing apparatus that detects, when the crew member accesses the respective access points with the information acquiring means, a position where the crew member is present.
